# EUROPÄISCHE PATENTSCHRIFT

(11) **EP 2 346 673 B1**
(45) Veröffentlichungstag und Bekanntmachung des Hinweises auf die Patenterteilung: **05.12.2012**
(21) Anmeldenummer: 09752138.9
(22) Anmeldetag: 27.10.2009
(51) Int. Cl.: B29C 70/30

(54) **VERFAHREN UND VORRICHTUNG ZUM VERSTÄRKEN EINES SUBSTRATS ODER EINES TEXTILS EINER KERNSTRUKTUR EINES BAUELEMENTES**
METHOD AND APPARATUS FOR REINFORCING A SUBSTRATE OR A FABRIC IN A CORE STRUCTURE OF A COMPONENT
PROCÉDÉ ET DISPOSITIF POUR RENFORCER UN SUBSTRAT OU UN TEXTILE D'UNE STRUCTURE CENTRALE D'UN COMPOSANT

(30) Priorität: 30.10.2008 DE 102008043314; 30.10.2008 US 109644 P
(43) Veröffentlichungstag der Anmeldung: 27.07.2011
(73) Patentinhaber: Airbus Operations GmbH, 21129 Hamburg (DE)
(72) Erfinder: ENDRES, Gregor Christian, 85276 Pfaffenhofen (DE); WEBER, Hans-Jürgen, 27283 Verden (DE)
(74) Vertreter: Isarpatent
(86) Internationale Anmeldenummer: PCT/EP2009/064157
(87) Internationale Veröffentlichungsnummer: WO 2010/049425

(56) Entgegenhaltungen:
- DE-A1-102006 025 753
- GB-A- 2 132 134
- US-A1- 2008 145 592

## Beschreibung

Die vorliegende Erfindung bezieht sich auf ein Verfahren und eine Vorrichtung zum Verstärken eines Substrats oder eines Textils einer Kernstruktur eines Bauelementes, beispielsweise eines Luft- oder Raumfahrzeugs. Die Erfindung betrifft auch ein Bauelement, beispielsweise eines Luft- oder Raumfahrzeugs, und ferner ein Luft- oder Raumfahrzeug.

Aufgrund ihres besonders guten Verhältnisses von Steifigkeit bzw. Festigkeit zu Dichte finden Kernverbunde einen breiten Anwendungsbereich, wie beispielsweise in der Luft- und Raumfahrt.

Kernverbunde werden im Allgemeinen aus einer oberen und einer unteren Deckschicht bzw. Decklage gebildet, zwischen denen sich zur Erhöhung der Steifigkeit beispielsweise eine aus vertikal verlaufenden Zellen mit hexagonalen Querschnitt gebildete, honigwabenartige Kernstruktur befindet.

Eine mögliche Alternative sind Schaumstoffe. Das spezifische mechanische Potenzial von Schaumstoffen ist aber im Vergleich zu Wabenstrukturen geringer. Dennoch sind Schaumstoffe vor allem bei der Bauteilherstellung sowie im Bereich erweiterter Bauteileigenschaften aufgrund ihrer Multifunktionalität für eine Anwendung in Kernverbunden, wie beispielsweise für strukturelle Luft- oder Raumfahrtanwendungen, von Interesse. Daher wurden unterschiedliche Methoden entwickelt, um die mechanischen Eigenschaften der Schaumstoffe zu erhöhen, ohne einen zu großen Zuwachs bei der Dichte zu verzeichnen. Mittels Nähtechnik, Einbringung von Pins oder ähnlichen Verfahren wird der Kern lokal verstärkt, ohne das Gewicht der Struktur stark zu erhöhen. Zudem besteht bei verschiedenen Verfahren die Möglichkeit, die mechanischen Eigenschaften der Kernstruktur durch lokale Variation der Pindichte und Pinwinkel auf den jeweiligen Anwendungsfall maßzuschneidern. Neben den statisch interessanten mechanischen Eigenschaften weisen diese Kernstrukturen zusätzlich noch eine Eigenschaft auf, die für einen Impakt d.h. Aufprall bzw. die Größe des Impaktschadens sehr interessant sind.

Bei diesem verstärkenden Halbzeug, d.h. Pins, handelt es sich um dünne, stabförmige Elemente beliebigen Querschnitts. Sie müssen für eine Verarbeitung eine ausreichende Eigensteifigkeit aufweisen. Die verwendeten Pins haben zum Beispiel einen Durchmesser von 0,279 bis 0,711mm.

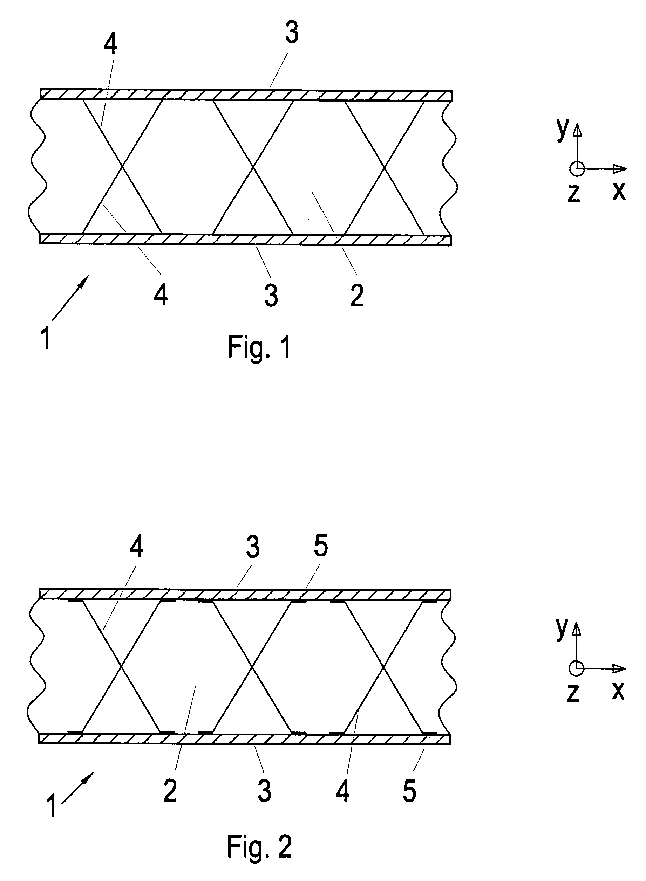

Fig. 1 zeigt dazu ein Beispiel eines mit Halbzeugen 4 verstärkten Kernverbunds 1 nach dem Stand der Technik. Ein Koordinatensystem x, y, z dient zur besseren Orientierung. Die x-Achse entspricht hier einer Längsachse des Kernverbunds, die y-Achse einer Hochachse und die z-Achse einer Breitenachse. Der Kernverbund 1 besteht aus einer Kernstruktur 2 und jeweiligen Decklagen 3 der Kernstruktur 2. Die Kernstruktur 1 ist mit Pins 4 durchsetzt, welche hier unter bestimmten Winkeln zur Längsachse x und Hochachse y eingebracht sind, wobei sie sich nicht berühren. Sie können auch winklig zur Breitenachse z stehen. Ein weiteres Beispiel aus dem Stand der Technik zeigt Fig. 2, bei welchem im Unterschied zu Fig. 1 die Enden der Pins Faltungen 5 aufweisen. Alternativ können die Enden auch in die Decklagen 3 eindringen (nicht gezeigt). Der Konstrukteur hat die Möglichkeit, durch Variation von lokaler Pindichte, -länge, -durchmesser und -winkel einen für jede Anwendung optimalen Kern zu konzipieren. Die möglichen Winkel erstrecken sich von senkrechten Pins für besonders druckbeanspruchte Bauteilregionen bis hin zu einem Winkel zwischen 20...30° für Schubverstärkungen. Durch die Veränderung der Pindichte in den Materialrichtungen längs x- und z-Achse (siehe Fig. 1 und 2) kann sowohl ein isotroper Werkstoff mit einem Festigkeitsverhältnis von x- zu z-Achse von 1:1 als auch ein anisotroper Kern im Verhältnis von zum Beispiel 2:1 oder 4:1 verwendet werden. Die Pindichte ist bis zu einem Wert von zum Beispiel 208kg/m³ steigerbar.

Bei dem entwickelten Verfahren werden die Pins ultraschallgestützt in den Schaumstoff eingebracht und in einem zweiten Schritt an der Oberfläche umgefaltet.

Dieses Verfahren kann auch zur dreidimensionalen Verstärkung von Textilien als Kernverbunde eingesetzt werden.

Ein Beispiel zur Illustration zeigt US 6,291,049 B1, welche eine Sandwichstruktur mit einer Vielzahl von diskreten Pins beschreibt.

DIE 102006025753 offenbart ein Verfahren und eine Vorrichtung zum Verstärken eines Substrats oder eines Textils eines Kernstruktur eines Bauelementes mit folgenden Verfahrensschritte: Zuführen eines Endloshalbzeuges in einen Köcher, Ablängen des Endloshalbzeuges mittels einer Trenneinrichtunbg und Fördern des Köchers zu einem zu verstärkenden substrat oder Textil einer Kernstruktur.

Der große Nachteil dieser Verfahren liegt in den hohen Kosten bedingt durch hohe Herstellungszeiten.

Es ist daher Aufgabe der vorliegenden Erfindung ein Verfahren und eine Vorrichtung, sowie ein Bauelement und ein Luft- oder Raumfahrzeug zur Verfügung zu stellen, bei dem der Herstellungsprozess so optimiert ist, dass die obigen Nachteile nicht mehr auftreten bzw. in einem erheblichen Maß verringert sind.

Erfindungsgemäß wird diese Aufgabe durch Verfahren mit den Merkmalen der Patentansprüche 1 und 2, eine Vorrichtung mit den Merkmalen des Patentanspruchs 7, ein Bauelement mit den Merkmalen des Patentanspruchs 15 und ein Luft- oder Raumfahrzeug mit den Merkmalen des Patentanspruchs 16 gelöst.

Demgemäß wird ein Verfahren zum Verstärken eines Substrats oder eines Textils einer Kernstruktur eines Bauelementes, beispielsweise eines Luft- oder Raumfahrzeugs, mit folgenden Verfahrensschritten bereitgestellt.
Ein Endloshalbzeug wird in einen Köcher einer mehrere Köcher aufweisenden Fördereinrichtung mittels einer Zufuhreinrichtung zugeführt. Dann wird es zum Erzeugen eines in den Köcher aufgenommenen, abgelängten und verstärkenden Halbzeuges mittels einer Trenneinrichtung abgelängt. Der Köcher wird zu einer Bearbeitungseinrichtung gefördert, wo ein Anspitzen des abgelängten, verstärkenden Halbzeuges mittels der Bearbeitungseinrichtung erfolgt. Ein weiteres Fördern des Köchers zu einem zu verstärkenden Substrat oder Textil einer Kernstruktur schließt sich an. Dort wird das angespitzten Halbzeug in das Textil oder das Substrat einer Kernstruktur mittels einer Bolzeneinschusseinrichtung eingeschossen.

Ferner wird ein Verfahren zum Verstärken eines Substrats oder eines Textils einer Kernstruktur eines Bauelementes, beispielsweise eines Luft- oder Raumfahrzeugs geschaffen, wobei ein Endloshalbzeug in einen Köcher mittels einer Zufuhreinrichtung zugeführt wird. Das freie Ende des Endloshalbzeuges wird mittels einer Bearbeitungseinrichtung angespitzt. Darauf schließt sich ein Ablängen des angespitzten Endloshalbzeuges zum Erzeugen eines in den Köcher aufgenommenen, abgelängten und verstärkenden Halbzeuges mittels einer Trenneinrichtung an. Der Köcher wird dann zu einem zu verstärkenden Textil oder Substrat einer Kernstruktur gefördert, wo das angespitzte Halbzeug mittels einer Bolzeneinschusseinrichtung in das Substrat oder das Textil einer Kernstruktur eingeschossen wird.

Zudem wird eine Vorrichtung zur Verstärkung eines Substrats oder eines Textils einer Kernstruktur eines Bauelementes, beispielsweise eines Luft- oder Raumfahrzeugs, bereitgestellt, welche eine Zufuhreinrichtung zum Zuführen eines Endloshalbzeuges zu einem Köcher aufweist. Eine Fördereinrichtung weist diesen Köcher oder mehrere auf. Eine Trenneinrichtung zur Erzeugung eines in den Köcher aufgenommenen Halbzeuges und eine zum Anspitzen des abgelängten und verstärkenden Halbzeuges sind ebenfalls Bestandteile der Vorrichtung. Die Vorrichtung weist zudem eine Bolzeneinschusseinrichtung zum Einschießen des angespitzten Halbzeuges in das Textil oder das Substrat einer Kernstrukturen sowie eine Fördereinrichtung zum Fördern des Köchers auf.

Eine grundlegende Idee der Erfindung besteht darin, das zu versteifende Halbzeug mittels einer Bolzeneinschusseinrichtung in das Substrat oder das Textil einzuschießen.

Somit weist die vorliegende Erfindung gegenüber den eingangs genannten Ansätzen unter anderem den Vorteil auf, dass im Gegensatz zu einem ultraschallgestützten "Einmassieren" das Einschießen des Halbzeugs mittels der Bolzeneinschusseinrichtung erheblich schneller ist und somit den Hauptkostenfaktor Zeit entsprechend reduziert.

Die Pinlänge ist für das Halbzeug variabel durch den Ablängvorgang einstellbar. Dadurch können die Pins als Halbzeuge in den Köchern nacheinander unterschiedliche Längen aufweisen. Jedes Halbzeug erhält somit einen eigenen Köcher in einem Gurtsystem. In den Köcher wird das Endloshalbzeug eingesteckt und abgelängt. Dies kann auch nebeneinander an mehreren Positionen gleichzeitig erfolgen.

Unter dem Begriff "Köcher" ist ein Bauteil zur temporären Aufnahme bzw. Fixierung des Endloshalbzeugs und/oder des Halbzeugs zu verstehen. Dieser "Köcher" kann zur Fixierung des jeweiligen Halbzeugs zum Beispiel einen Klebstoff aufweisen. Auch eine Vakuumfixierung des jeweiligen Halbzeugs kann möglich sein.

Das Gurtsystem kann die Köcher kontinuierlich oder auch taktweise von einer Station zur nächsten befördern. Es sind auch Pufferstationen möglich. Das Gurtsystem kann auch eine Endlosschleife bilden.

Das Anspitzen des Halbzeugs kann bevorzugt mit einem Walzenfräser vorgenommen werden. Walzenfräser sind zum Beispiel in Spitzmaschinen eingesetzt und daher marktüblich bei hoher Qualität und entsprechender Durchsatzleistung erhältlich. Andere Bearbeitungsmittel, wie zum Beispiel schräges Abschneiden mit Schneidenbildung oder Anschleifen, sind natürlich auch möglich.

Die Reihenfolge Ablängen und Anspitzen kann auch vertauscht sein.

Das Gurtsystem befördert das Halbzeug unter die Bolzeneinschusseinrichtung zum Einschießen in das Substrat oder Textil.

Das Einschießen der Halbzeuge in das Textil oder das Substrat der Kernstruktur erfolgt in vorher festlegbare Richtungen relativ zu Hauptachsen des Textils oder der Kernstruktur. Dadurch ist es möglich, dreidimensional verstärkte Kernverbunde zu erzeugen.

Es ist bevorzugt, dass das Einschießen der Halbzeuge mittels eines jeweils angepassten Bolzens der Bolzeneinschusseinrichtung durchgeführt wird. Der Bolzen wird bevorzugt in Längsrichtung der Halbzeuge bewegt. In dem Fall, wenn das Halbzeug nagel- bzw. nadelartig ausgebildet ist, ist es bevorzugt, dass der Bolzen an seinem dem Halbzeug zugewandten Ende einen Durchmesser aufweist, der im Wesentlichen dem Durchmesser des dem Bolzen zugewandten Endes des Halbzeuges entspricht. Durch diese Anpassung ist es möglich, das Halbzeug ohne Beschädigung mit hoher Geschwindigkeit in das Substrat oder Textil einzuschießen.

In alternativer Ausführung ist für den Fall, wenn das Halbzeug krampenartig ausgebildet ist, dass der Bolzen an seinem dem krampenartigen Halbzeug zugewandten Ende eine Breite aufweist, die im Wesentlichen der Breite des dem Bolzen zugewandten Endes des krampenartigen Halbzeuges entspricht. Hierbei können die Krampen als bereits fertige Gurtware in das Gurtsystem eingesetzt werden.

Die Bolzeneinschusseinrichtung weist einen elektrischen, pneumatischen oder/und hydraulischen Antrieb auf. Auch eine Kombination dieser Antriebsarten kann möglich sein.

Unter Berücksichtigung der jeweiligen Werkstoffeigenschaften können die Halbzeuge d.h. Pins aus allen drei Materialklassen bestehen, beispielsweise aus FVK (mit Fasern verstärkter Kunststoff), Titanlegierungen, Glas, SiC (z.B. Nicalon) oder Quarz.

Ein Bauelement, beispielsweise für ein Luft- oder Raumfahrzeug, weist zumindest einen Abschnitt mit einer Verstärkung eines Substrats oder eines Textils einer Kernstruktur auf, wobei die Verstärkung gemäß einem oben beschriebenen Verfahren oder mittels der oben beschriebenen Vorrichtung hergestellt ist.

Ein derartig verstärktes Substrat oder Textil bzw. damit ausgerüstetes Bauelement ist für einen großen Einsatzbereich verwendbar, beispielsweise Leichtbau, Luft- oder Raumfahrt, Fahrzeugbau, Sportgeräte und dergleichen.

Ein Luft- oder Raumfahrzeug weist das oben angegebene Bauelement auf.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Darstellung eines Längsschnitts eines ersten Beispiels eines Kernverbunds nach dem Stand der Technik;
- Fig. 2: ein schematische Darstellung eines Längsschnitts eines zweiten Beispiels eines Kernverbunds nach dem Stand der Technik; und
- Fig. 3: eine schematische Darstellung eines Ausführungsbeispiels einer erfindungsgemäßen Vorrichtung.

In den Figuren bezeichnen dieselben Bezugszeichen gleiche oder funktionsgleiche Komponenten, soweit nichts Gegenteiliges angegeben ist. Weiterhin sind in den Figuren Koordinatensysteme x, y, z zur besseren Orientierung angegeben.

Fig. 1 und 2 sind bereits oben beschrieben und werden hier nicht weiter behandelt.

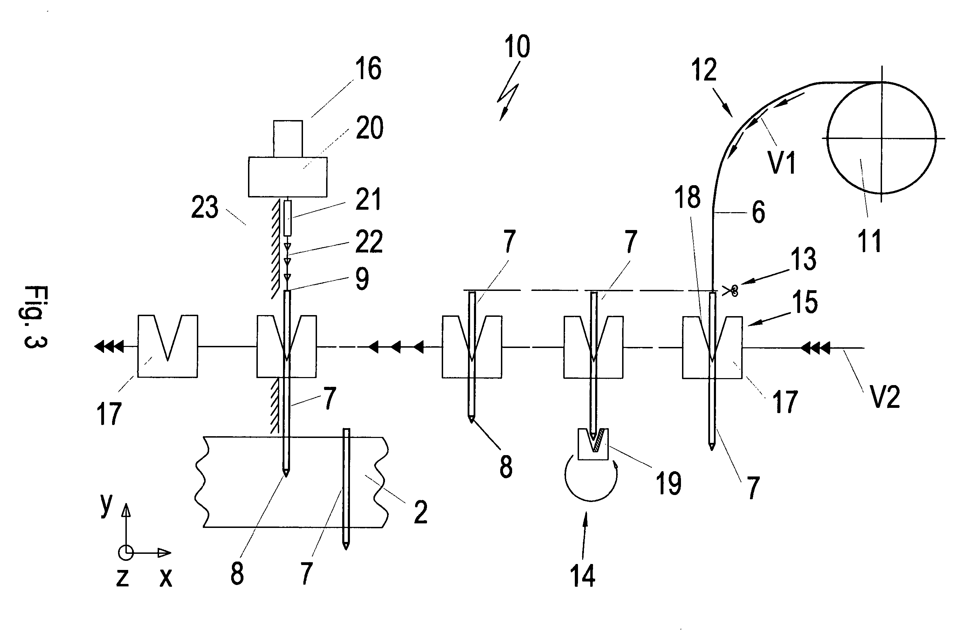

Fig. 3 illustriert eine schematische Darstellung eines Ausführungsbeispiels einer erfindungsgemäßen Vorrichtung 10.

Die Vorrichtung 10 weist in diesem Beispiel Folgendes auf: Eine Zufuhreinrichtung 12 zur Zuführung von Endloshalbzeug 6 in einer Vorschubrichtung Endloshalbzeug V1, eine Trenneinrichtung 13 zum Ablängen des Endloshalbzeugs 6 zum Erzeugen von Halbzeugen 7 einer vorher einstellbaren Länge, Köcher 17 zur Aufnahme des Endloshalbzeug 6 und der abgelängten Halbzeuge 7, eine Bearbeitungseinrichtung 14 zur Bearbeitung der Halbzeuge 7, eine Bolzeneinschusseinrichtung 16 zum Einschießen der Halbzeuge 7 in ein Substrat oder ein Textil einer Kernstruktur 2 und eine Fördereinrichtung 15 zur Förderung der Köcher 17.

Das Endloshalbzeug 6 ist hier auf einer Rolle als Endloshalbzeugspeicher 11 aufgewickelt und wird mit der Zuführeinrichtung 12, zum Beispiel ein taktgesteuerter Drahtvorschub, zum Beispiel ähnlich wie bei einem Drahtzusatzwerkstoff einer Schweißmaschine, in einen Köcher 17 eingeführt. Der Köcher 17 kann zur Erleichterung der Einführung zum Beispiel einen V-förmigen Köchereinlass 18 aufweisen. Ist die vorher eingestellte Länge erreicht, trennt die Trenneinrichtung 13 das Endloshalbzeug 6 zur Erzeugung eines abgelängten Halbzeugs 7. Die Längeneinstellung und -messung kann mit üblichen Einrichtungen erfolgen.

Das abgelängte Halbzeug 7 wird dann zur Bearbeitungseinrichtung 14 befördert. Dazu dient die Fördereinrichtung 15, welche in einer Vorschubrichtung Fördereinrichtung V2 kontinuierlich zwischen den einzelnen Stationen den Köcher 17 oder mehrere in einer Art Gurtsystem befördert. An den Stationen wird der Köcher 17 jeweils angehalten. Die Bearbeitungseinrichtung 14 weist ein Bearbeitungswerkzeug 19 auf, welches in diesem Beispiel ein Walzenfräser ist. Die Bearbeitungseinrichtung 14 ist hier eine Anspitzmaschine, welche ein Ende des Halbzeugs 7 zu einer Spitze 8 anspitzt, damit dieses beim Einschießvorgang entsprechend schnell in den Kernverbund 2 eindringen kann.

Die Fördereinrichtung befördert dann das angespitzte Halbzeug 7 weiter zur Bolzeneinschießeinrichtung 16. Hier kann ein Anschlag 23 zur Führung des Halbzeugs 7 vorgesehen sein. Die Bolzeneinschießeinrichtung 16 weist einen Bolzeneinschussapparat 20 auf, welcher elektrisch, pneumatisch oder/und hydraulisch einen Bolzen 21 in einer Bolzeneinschusseinrichtung 22 hin- und herbewegt. Die Bolzeneinschusseinrichtung 22 stimmt mit der Längsachse des Halbzeugs 7 überein. Der Bolzen 21 weist ein unteres Ende auf, welches mit dem Durchmesser des oberen Endes (Kopf 9) des Halbzeugs 7 übereinstimmt. Der Bolzeneinschussapparat 20 bewegt den Bolzen 21 derart, dass das unter ihm angeordnete Halbzeug 7 von ihm direkt auf den Kopf 9 getroffen und in die Kernstruktur 2 eingeschossen wird. In dem gezeigten Beispiel verläuft die Bolzeneinschussrichtung 22 längs der y-Achse des Kernverbunds 2. Für andere Winkel des Halbzeugs 7 kann die Bolzeneinschusseinrichtung 16 entsprechend zu den Achsen x, y, z des Kernverbunds 2 verstellt werden, was hier nicht explizit dargestellt ist, aber leicht vorstellbar ist.

Das eingeschossene Halbzeug 7 verstärkt den Kernverbund 2 in oben beschriebener Weise. Die Form der Spitze 8 kann entsprechend dem Werkstoff des Kernverbunds 2 angepasst werden, indem die Bearbeitungseinrichtung 14 entsprechende Bearbeitungswerkzeuge 19 auswählt.

Die Vorrichtung 10 weist in dem hier gezeigten Beispiel eine Steuereinrichtung, zum Beispiel einen oder mehrere Mikrokontroller, auf, welche alle Einrichtungen und Vorgänge überwacht und steuert. Dies kann vollautomatisch erfolgen.

Es können mehrere dieser Vorrichtungen 10 gleichzeitig und/oder parallel angeordnet sein.

Obwohl die vorliegende Erfindung anhand bevorzugter Ausführungsbeispiele vorliegend beschrieben wurde, ist sie darauf nicht beschränkt, sondern auf vielfältige Weise kombinierbar und modifizierbar.

Beispielsweise kann das Endloshalbzeug 6 in den Köcher 17 eingeführt werden, wobei es gleichzeitig angespitzt und abgelängt wird.

Die Köcher 17 können auch eine Vakuumeinrichtung und/oder Klebstoff zur temporären Fixierung des jeweiligen Endloshalbzeugs/Halbzeugs aufweisen. Eine derartige Vakuumeinrichtung kann aus Löchern bestehen, die mit einem Vakuum beaufschlagt sind, wobei diese Löcher so angeordnet (zum Beispiel in Längsrichtung jeweiligen Halbzeugs/Werkstücks) sind, dass das jeweilige Halbzeug/Werkstück ansaugbar ist.

Bei einem Verfahren zum Verstärken eines Substrats oder eines Textils einer Kernstruktur 2 eines Bauelementes, beispielsweise eines Luft- oder Raumfahrzeugs, werden folgende Verfahrensschritte durchgeführt: Zuführen eines Endloshalbzeuges 6 in einen Köcher 17 einer mehrere Köcher 17 aufweisenden Fördereinrichtung 15 mittels einer Zufuhreinrichtung 12; Ablängen des Endloshalbzeuges 6 zum Erzeugen eines in den Köcher 17 aufgenommenen, abgelängten und verstärkenden Halbzeuges 7 mittels einer Trenneinrichtung 13; Fördern des Köchers 17 zu einer Bearbeitungseinrichtung 14; Anspitzen des abgelängten, verstärkenden Halbzeuges 7 mittels der Bearbeitungseinrichtung 14; Fördern des Köchers 17 zu einem zu verstärkenden Textil oder Substrat einer Kernstruktur 2; und Einschießen des angespitzten Halbzeuges 7 in das Textil oder das Substrat einer Kernstruktur 2 mittels einer Bolzeneinschusseinrichtung 16. Eine entsprechende Vorrichtung dient zur Durchführung des Verfahrens, ein Bauelement ist nach dem Verfahren und/oder mit der Vorrichtung erstellt und ein Luft- oder Raumfahrzeug weist ein solches Bauelement auf.

Bevorzugte Ausführungsbeispiele der vorliegenden Erfindung:
1. Verfahren zum Verstärken eines Substrats oder eines Textils einer Kernstruktur (2) eines Bauelementes, beispielsweise eines Luft- oder Raumfahrzeugs, mit folgenden Verfahrensschritten:
   (i) Zuführen eines Endloshalbzeuges (6) in einen Köcher (17) einer mehrere Köcher (17) aufweisenden Fördereinrichtung (15) mittels einer Zufuhreinrichtung (12);
   (ii) Ablängen des Endloshalbzeuges (6) zum Erzeugen eines in den Köcher (17) aufgenommenen, abgelängten und verstärkenden Halbzeuges (7) mittels einer Trenneinrichtung (13);
   (iii) Fördern des Köchers (17) zu einer Bearbeitungseinrichtung (14);
   (iv) Anspitzen des abgelängten, verstärkenden Halbzeuges (7) mittels der Bearbeitungseinrichtung (14) ;
   (v) Fördern des Köchers (17) zu einem zu verstärkenden Substrat oder Textil einer Kernstruktur (2); und
   (vi) Einschießen des angespitzten Halbzeuges (7) in das Substrat oder das Textil der Kernstruktur (2) mittels einer Bolzeneinschusseinrichtung (16).
2. Verfahren zum Verstärken eines Substrats oder eines Textils einer Kernstruktur (2) eines Bauelementes, beispielsweise eines Luft- oder Raumfahrzeugs, mit folgenden Verfahrensschritten:
   (i') Zuführen eines Endloshalbzeuges (6) in einen Köcher (17) einer mehrere Köcher (17) aufweisenden Fördereinrichtung (15) mittels einer Zufuhreinrichtung (12);
   (ii') Anspitzen des freien Endes des Endloshalbzeuges (7) mittels einer Bearbeitungseinrichtung (14);
   (iii') Ablängen des angespitzten Endloshalbzeuges (6) zum Erzeugen eines in den Köcher (17) aufgenommenen, abgelängten und verstärkenden Halbzeuges (7) mittels einer Trenneinrichtung (13);
   (iv') Fördern des Köchers (17) zu einem zu verstärkenden Substrat oder Textil einer Kernstruktur (2); und
   (v') Einschießen des angespitzten Halbzeuges (7) in das Substrat oder das Textil der Kernstruktur (2) mittels einer Bolzeneinschusseinrichtung (16).
3. Verfahren nach Ausführungsbeispiel 1 oder 2,
   **dadurch gekennzeichnet,**
   dass das Ablängen des Endloshalbzeuges (6) für voreinstellbare Längen durchgeführt wird.
4. Verfahren nach zumindest einem der vorhergehenden Ausführungsbeispiele,
   **dadurch gekennzeichnet,**
   dass die Fördereinrichtung (15) mehrere Köcher (17) in einer Endlosschleife kontinuierlich oder taktweise vorwärtsbewegt, wodurch jeweils die in die jeweiligen Köcher (17) eingeführten Halbzeuge (7) von der Zufuhreinrichtung (12) zur Bolzeneinschusseinrichtung (16) befördert werden.
5. Verfahren nach zumindest einem der vorhergehenden Ausführungsbeispiele,
   **dadurch gekennzeichnet,**
   dass das Einschießen der Halbzeuge (7) in das Textil oder das Substrat der Kernstruktur (2) in vorher festlegbare Richtungen relativ zu Hauptachsen des Textils oder der Kernstruktur (2) durchgeführt wird.
6. Verfahren nach Ausführungsbeispiel 5,
   **dadurch gekennzeichnet,**
   dass das Einschießen der Halbzeuge (7) mittels eines jeweils angepassten Bolzens (22) der Bolzeneinschusseinrichtung (16) durchgeführt wird, wobei der Bolzen im Wesentlichen in Längsrichtung der Halbzeuge (7) bewegt wird.
7. Vorrichtung (10) zur Verstärkung eines Substrats oder eines Textils einer Kernstruktur (2) eines Bauelementes, beispielsweise eines Luft- oder Raumfahrzeugs, mit:
   einer Zufuhreinrichtung (12) zum Zuführen eines Endloshalbzeuges (6) zu einem Köcher (17);
   einer mehrere Köcher (17) aufweisenden Fördereinrichtung (15) ;
   einer Trenneinrichtung (13) zum Erzeugen eines in den Köcher (17) aufgenommenen Halbzeuges (7);
   einer Bearbeitungseinrichtung (14) zum Anspitzen des abgelängten und verstärkenden Halbzeuges (7);
   einer Bolzeneinschusseinrichtung (16) zum Einschießen des angespitzten Halbzeuges (7) in das Substrat oder das Textil einer Kernstruktur (2); und
   einer Fördereinrichtung (15) zum Fördern des Köchers (17).
8. Vorrichtung (10) nach Ausführungsbeispiel 7,
   **dadurch gekennzeichnet**,
   dass die Fördereinrichtung (15) mehrere Köcher (17) zur Aufnahme des Endloshalbzeuges (6) und der Halbzeuge (7) aufweist.
9. Vorrichtung (10) nach Ausführungsbeispiel 8,
   **dadurch gekennzeichnet**,
   dass die Köcher (17) aneinander in einer Endlosschleife angeordnet sind.
10. Vorrichtung (10) nach zumindest einem der Ausführungsbeispiele 7 bis 9,
   **dadurch gekennzeichnet**,
   dass die Bearbeitungseinrichtung (14) zur Anspitzung jeweils eines Endes der Halbzeuge (7) als Spitzmaschine ausgebildet ist.
11. Vorrichtung (10) nach zumindest einem der Ausführungsbeispiele 7 bis 10,
   **dadurch gekennzeichnet**,
   dass die Bolzeneinschusseinrichtung (16) einen Bolzen (22) aufweist, welcher in Längsrichtung des Halbzeuges (7) bewegbar angeordnet ist.
12. Vorrichtung (10) nach Ausführungsbeispiel 11,
   **dadurch gekennzeichnet**,
   dass der Bolzen (22), wenn das Halbzeug (7) nagel- bzw. nadelartig ausgebildet ist, an seinem dem Halbzeug (7) zugewandten Ende einen Durchmesser aufweist, der im Wesentlichen dem Durchmesser des dem Bolzen (22) zugewandten Endes des Halbzeuges (7) entspricht.
13. Vorrichtung (10) nach Ausführungsbeispiel 11,
   **dadurch gekennzeichnet**,
   dass der Bolzen (22), wenn das Halbzeug (7) krampenartig ausgebildet ist, an seinem dem krampenartigen Halbzeug (7) zugewandten Ende eine Breite aufweist, die im Wesentlichen der Breite des dem Bolzen (22) zugewandten Endes des krampenartigen Halbzeuges (7) entspricht.
14. Vorrichtung (10) nach zumindest einem der Ausführungsbeispiele 7 bis 13,
   **dadurch gekennzeichnet**,
   dass die Bolzeneinschusseinrichtung (22) einen elektrischen, pneumatischen oder/und hydraulischen Antrieb aufweist.
15. Bauelement, eines Luft- oder Raumfahrzeugs,
   **dadurch gekennzeichnet**,
   dass das Bauelement zumindest einen Abschnitt mit einer Verstärkung eines Substrats oder eines Textils einer Kernstruktur (2) aufweist, wobei die Verstärkung gemäß einem Verfahren nach zumindest einem der Ansprüche 1 bis 6 und/oder mittels einer Vorrichtung nach zumindest einem der Ansprüche 7 bis 14 hergestellt ist.

### Bezugszeichenliste

- 1: Kernverbund
- 2: Kernstruktur
- 3: Decklage
- 4: Pin
- 5: Faltung
- 6: Endloshalbzeug
- 7: Halbzeug
- 8: Spitze
- 9: Kopf
- 10: Vorrichtung
- 11: Endloshalbzeugspeicher
- 12: Zufuhreinrichtung
- 13: Trenneinrichtung
- 14: Bearbeitungseinrichtung
- 15: Fördereinrichtung
- 16: Bolzeneinschusseinrichtung
- 17: Köcher
- 18: Köchereinlass
- 19: Bearbeitungswerkzeug
- 20: Bolzeneinschussapparat
- 21: Bolzen
- 22: Bolzeneinschussrichtung
- 23: Anschlag
- V1: Vorschubrichtung Endloshalbzeug
- V2: Vorschubrichtung Fördereinrichtung
- x, y, z: Koordinaten

## Patentansprüche

1. Verfahren zum Verstärken eines Substrats oder eines Textils einer Kernstruktur (2) eines Bauelementes, beispielsweise eines Luft- oder Raumfahrzeugs, mit folgenden Verfahrensschritten:
(i) Zuführen eines Endloshalbzeuges (6) in einen Köcher (17) einer mehrere Köcher (17) aufweisenden Fördereinrichtung (15) mittels einer Zufuhreinrichtung (12);
(ii) Ablängen des Endloshalbzeuges (6) zum Erzeugen eines in den Köcher (17) aufgenommenen, abgelängten und verstärkenden Halbzeuges (7) mittels einer Trenneinrichtung (13);
(iii) Fördern des Köchers (17) zu einer Bearbeitungseinrichtung (14);
(iv) Anspitzen des abgelängten, verstärkenden Halbzeuges (7) mittels der Bearbeitungseinrichtung (14);
(v) Fördern des Köchers (17) zu einem zu verstärkenden Substrat oder Textil einer Kernstruktur (2); und
(vi) Einschießen des angespitzten Halbzeuges (7) in das Substrat oder das Textil der Kernstruktur (2) mittels einer Bolzeneinschusseinrichtung (16).

2. Verfahren zum Verstärken eines Substrats oder eines Textils einer Kernstruktur (2) eines Bauelementes, beispielsweise eines Luft- oder Raumfahrzeugs, mit folgenden Verfahrensschritten:
(i') Zuführen eines Endloshalbzeuges (6) in einen Köcher (17) einer mehrere Köcher (17) aufweisenden Fördereinrichtung (15) mittels einer Zufuhreinrichtung (12);
(ii') Anspitzen des freien Endes des Endloshalbzeuges (7) mittels einer Bearbeitungseinrichtung (14);
(iii') Ablängen des angespitzten Endloshalbzeuges (6) zum Erzeugen eines in den Köcher (17) aufgenommenen, abgelängten und verstärkenden Halbzeuges (7) mittels einer Trenneinrichtung (13);
(iv') Fördern des Köchers (17) zu einem zu verstärkenden Substrat oder Textil einer Kernstruktur (2); und
(v') Einschießen des angespitzten Halbzeuges (7) in das Substrat oder das Textil der Kernstruktur (2) mittels einer Bolzeneinschusseinrichtung (16).

3. Verfahren zum Verstärken eines Substrats oder eines Textils einer Kernstruktur (2) eines Bauelementes, beispielsweise eines Luft- oder Raumfahrzeugs, mit folgenden Verfahrensschritten:
(i') Zuführen eines krampenartigen Halbzeuges (7) als fertige Gurtware in einen Köcher (17) einer mehrere Köcher (17) aufweisenden Fördereinrichtung (15) mittels einer Zufuhreinrichtung (12);
(ii') Fördern des Köchers (17) zu einem zu verstärkenden Substrat oder Textil einer Kernstruktur (2); und
(v') Einschießen des krampenartigen Halbzeuges (7) in das Substrat oder das Textil der Kernstruktur (2) mittels einer Bolzeneinschusseinrichtung (16).

4. Verfahren nach zumindest einem der vorhergehenden Ansprüche,
**dadurch gekennzeichnet,**
**dass** die Fördereinrichtung (15) mehrere Köcher (17) in einer Endlosschleife kontinuierlich oder taktweise vorwärtsbewegt, wodurch jeweils die in die jeweiligen Köcher (17) eingeführten Halbzeuge (7) von der Zufuhreinrichtung (12) zur Bolzeneinschusseinrichtung (16) befördert werden.

5. Verfahren nach zumindest einem der vorhergehenden Ansprüche,
**dadurch gekennzeichnet,**
**dass** das Einschießen der Halbzeuge (7) in das Textil oder das Substrat der Kernstruktur (2) in vorher festlegbare Richtungen relativ zu Hauptachsen des Textils oder der Kernstruktur (2) durchgeführt wird.

6. Vorrichtung (10) zur Verstärkung eines Substrats oder eines Textils einer Kernstruktur (2) eines Bauelementes, beispielsweise eines Luft- oder Raumfahrzeugs, mit:
einer Zufuhreinrichtung (12) zum Zuführen eines Endloshalbzeuges (6) zu einem Köcher (17);
einer mehrere Köcher (17) aufweisenden Fördereinrichtung (15) ;
einer Trenneinrichtung (13) zum Erzeugen eines in den Köcher (17) aufgenommenen Halbzeuges (7);
einer Bearbeitungseinrichtung (14) zum Anspitzen des abgelängten und verstärkenden Halbzeuges (7);
einer Bolzeneinschusseinrichtung (16) zum Einschießen des angespitzten Halbzeuges (7) in das Substrat oder das Textil einer Kernstruktur (2); und
einer Fördereinrichtung (15) zum Fördern des Köchers (17).

7. Vorrichtung (10) nach Anspruch 6,
**dadurch gekennzeichnet,**
**dass** die Bolzeneinschusseinrichtung (16) einen Bolzen (22) aufweist, welcher in Längsrichtung des Halbzeuges (7) bewegbar angeordnet ist und an seinem dem Halbzeug (7) zugewandten Ende einen Durchmesser aufweist, der im Wesentlichen dem Durchmesser des dem Bolzen (22) zugewandten Endes des Halbzeuges (7) entspricht.

8. Vorrichtung (10) zur Verstärkung eines Substrats oder eines Textils einer Kernstruktur (2) eines Bauelementes, beispielsweise eines Luft- oder Raumfahrzeugs, mit:
einer Zufuhreinrichtung (12) zum Zuführen eines krampenartigen Halbzeuges (7) als fertige Gurtware zu einem Köcher (17);
einer mehrere Köcher (17) aufweisenden Fördereinrichtung (15);
einer Bolzeneinschusseinrichtung (16) zum Einschießen des krampenartigen Halbzeuges (7) in das Substrat oder das Textil einer Kernstruktur (2); und
einer Fördereinrichtung (15) zum Fördern des Köchers (17).

9. Vorrichtung (10) nach Anspruch 8,
**dadurch gekennzeichnet,**
**dass** die Bolzeneinschusseinrichtung (16) einen Bolzen (22) aufweist, welcher in Längsrichtung des Halbzeuges (7) bewegbar angeordnet ist und an seinem dem krampenartigen Halbzeug (7) zugewandten Ende eine Breite aufweist, die im Wesentlichen der Breite des dem Bolzen (22) zugewandten Endes des krampenartigen Halbzeuges (7) entspricht.

10. Vorrichtung (10) nach zumindest einem der Ansprüche 6 bis 9,
**dadurch gekennzeichnet,**
**dass** die Köcher (17) aneinander in einer Endlosschleife angeordnet sind.

11. Vorrichtung (10) nach zumindest einem der Ansprüche 6 bis 10,
**dadurch gekennzeichnet,**
**dass** die Bolzeneinschusseinrichtung (22) einen elektrischen, pneumatischen oder/und hydraulischen Antrieb aufweist.

## Claims

1. Method for reinforcing a substrate or a textile of a core structure (2) of a component, for example of an aircraft or spacecraft, comprising the following method steps:
(i) introducing a continuous semi-finished product (6) into a receptacle (17) of a conveying means (15) comprising a plurality of receptacles (17), by means of an introduction means (12);
(ii) cutting the continuous semi-finished product (6) to length to produce a reinforcing semi-finished product (7) which has been cut to length and which is received in the receptacle (17), by means of a cutting means (13);
(iii) conveying the receptacle (17) to a machining means (14);
(iv) sharpening the reinforcing semi-finished product (7) which has been cut to length, by means of the machining means (14);
(v) conveying the receptacle (17) to a substrate or textile, which is to be reinforced, of a core structure (2); and
(vi) injecting the sharpened semi-finished product (7) into the substrate or textile of the core structure (2), by means of a bolt injection means (16).

2. Method for reinforcing a substrate or a textile of a core structure (2) of a component, for example of an aircraft or spacecraft, comprising the following method steps:
(i') introducing a continuous semi-finished product (6) into a receptacle (17) of a conveying means (15) comprising a plurality of receptacles (17), by means of an introduction means (12);
(ii') sharpening the free end of the continuous semi-finished product (7), by means of a machining means (14);
(iii') cutting the sharpened continuous semi-finished product (6) to length to produce a reinforcing semi-finished product (7) which has been cut to length and which is received in the receptacle (17), by means of a cutting means (13);
(iv') conveying the receptacle (17) to a substrate or textile, which is to be reinforced, of a core structure (2); and
(v') injecting the sharpened semi-finished product (7) into the substrate or textile of the core structure (2), by means of a bolt injection means (16).

3. Method for reinforcing a substrate or a textile of a core structure (2) of a component, for example of an aircraft or spacecraft, comprising the following method steps:
(i') introducing a staple-like semi-finished product (7) as a finished crimped product into a receptacle (17) of a conveying means (15) comprising a plurality of receptacles (17), by means of an introduction means (12);
(ii') conveying the receptacle (17) to a substrate or textile, which is to be reinforced, of a core structure (2); and
(v') injecting the staple-like semi-finished product (7) into the substrate or textile of the core structure (2), by means of a bolt injection means (16).

4. Method according to at least one of the preceding claims, **characterised in that** the conveying means (15) continuously or intermittently advances a plurality of receptacles (17) in an endless loop, and as a result the semi-finished products (7) which have been inserted into the respective receptacles (17) are each conveyed from the introduction means (12) to the bolt injection means (16).

5. Method according to at least one of the preceding claims, **characterised in that**, the semi-finished products (7) are injected into the textile or substrate of the core structure (2) in directions which can be set in advance relative to primary axes of the textile or of the core structure (2).

6. Device (10) for reinforcing a substrate or a textile of a core structure (2) of a component, for example an aircraft or spacecraft, comprising:
- an introduction means (12) for introducing a continuous semi-finished product (6) to a receptacle (17);
- a conveying means (15) comprising a plurality of receptacles (17);
- a cutting means (13) for producing a semi-finished product (7) which is received in the receptacle (17);
- a machining means (14) for sharpening the reinforcing semi-finished product (7) which has been cut to length;
- a bolt injection means (16) for injecting the sharpened semi-finished product (7) into the substrate or textile of a core structure (2); and
- a conveying means (15) for conveying the receptacle (17).

7. Device (10) according to claim 6, **characterised in that** the bolt injection means (16) comprises a bolt (22), which is arranged so as to be movable in the longitudinal direction of the semi-finished product (7) and which has a diameter, at the end thereof facing the semi-finished product (7), which substantially corresponds to the diameter of the end of the semi-finished product (7) facing the bolt (22).

8. Device (10) for reinforcing a substrate or a textile of a core structure (2) of a component, for example of an aircraft or spacecraft, comprising:
- an introduction means (12) for introducing a staple-like semi-finished product (7) as a finished crimped product into a receptacle (17);
- a conveying means (15) comprising a plurality of receptacles (17);
- a bolt injection means (16) for injecting the staple-like semi-finished product (7) into the substrate or textile of a core structure (2); and
- a conveying means (15) for conveying the receptacle (17).

9. Device (10) according to claim 8, **characterised in that** the bolt injection means (16) comprises a bolt (22), which is arranged so as to be movable in the longitudinal direction of the semi-finished product (7) and which has a width, at the end thereof facing the staple-like semi-finished product (7), which substantially corresponds to the width of the end of the staple-like semi-finished product (7) facing the bolt (22).

10. Device (10) according to at least one of claims 6 to 9, **characterised in that** the receptacles (17) are arranged side by side in an endless loop.

11. Device (10) according to at least one of claims 6 to 10, **characterised in that** the bolt injection means (22) comprises an electrical, pneumatic or/and hydraulic drive.

## Revendications

1. Procédé pour renforcer un substrat ou un textile d'une structure de coeur (2) d'un composant, par exemple d'un aéronef ou d'un véhicule spatial, comportant les étapes suivantes :
(i) l'acheminement d'un produit semi-fini continu (6) dans un étui (17) d'un dispositif de transport (15) présentant plusieurs étuis (17) au moyen d'un dispositif d'acheminement (12) ;
(ii) la coupe à longueur du produit semi-fini continu (6) pour la production d'un produit semi-fini (7) de renfort coupé à longueur et logé dans l'étui (17) au moyen d'un dispositif de sectionnement (13) ;
(iii) l'acheminement de l'étui (17) vers un dispositif d'usinage (14) ;
(iv) l'appointissage du produit semi-fini (7) de renfort coupé à longueur au moyen du dispositif d'usinage (14) ;
(v) le transport de l'étui (17) vers un substrat ou un textile à renforcer d'une structure de coeur (2) ; et
(vi) l'insertion du produit semi-fini (7) appointé dans le substrat ou le textile de la structure de coeur (2) au moyen d'un dispositif d'insertion à cheville (16).

2. Procédé pour renforcer un substrat ou un textile d'une structure de coeur (2) d'un composant, par exemple d'un aéronef ou d'un véhicule spatial, comportant les étapes suivantes :
(i') l'acheminement d'un produit semi-fini continu (6) dans un étui (17) d'un dispositif de transport (15) présentant plusieurs étuis (17) au moyen d'un dispositif d'acheminement (12) ;
(ii') l'appointissage de l'extrémité libre du produit semi-fini continu (7) au moyen d'un dispositif d'usinage (14) ;
(iii') la coupe à longueur du produit semi-fini continu (6) appointé pour produire un produit semi-fini (7) de renfort coupé à longueur et logé dans l'étui (17) au moyen d'un dispositif de sectionnement (13) ;
(iv') le transport de l'étui (17) vers un substrat ou un textile à renforcer d'une structure de coeur (2) ; et
(v') l'insertion du produit semi-fini (7) appointé dans le substrat ou le textile de la structure de coeur (2) au moyen d'un dispositif d'insertion à cheville (16).

3. Procédé pour renforcer un substrat ou un textile d'une structure de coeur (2) d'un composant, par exemple d'un aéronef ou d'un véhicule spatial, comportant les étapes suivantes :
(i') l'acheminement d'un produit semi-fini (7) de type agrafe sous la forme d'un produit froncé fini dans un étui (17) d'un dispositif de transport (15) présentant plusieurs étuis (17) au moyen d'un dispositif d'acheminement (12) ;
(ii') le transport de l'étui (17) vers un substrat ou un textile à renforcer d'une structure de coeur (2) ; et
(v') l'insertion du produit semi-fini (7) de type agrafe dans le substrat ou le textile de la structure de coeur (2) au moyen d'un dispositif d'insertion à cheville (16).

4. Procédé selon au moins l'une des revendications précédentes, **caractérisé par le fait que** le dispositif de transport (15) déplace plusieurs étuis (17) vers l'avant dans une boucle sans fin en continu ou de manière cadencée, ce qui permet que les produits semi-finis (7) respectifs introduits dans les étuis (17) respectifs soient transportés du dispositif d'acheminement (12) vers le dispositif d'insertion à cheville (16).

5. Procédé selon au moins l'une des revendications précédentes, **caractérisé par le fait que** l'insertion des produits semi-finis (7) dans le textile ou le substrat de la structure de coeur (2) est réalisée dans des directions pouvant être préalablement définies par rapport aux axes principaux du textile ou de la structure de coeur (2).

6. Dispositif (10) de renforcement d'un textile ou d'un substrat d'une structure de coeur (2) d'un composant, par exemple d'un aéronef ou d'un véhicule spatial, comportant :
- un dispositif d'acheminement (12) pour l'acheminement d'un produit semi-fini continu (6) vers un étui (17) ;
- un dispositif de transport (15) présentant plusieurs étuis (17) ;
- un dispositif de sectionnement (13) pour la production d'un produit semi-fini (7) logé dans les étuis (17) ;
- un dispositif d'usinage (14) pour l'appointissage du produit semi-fini (7) de renfort coupé à longueur ;
- un dispositif d'insertion à cheville (16) pour l'insertion du produit semi-fini (7) appointé dans le substrat ou le textile d'une structure de coeur (2) ; et
- un dispositif de transport (15) destiné au transport de l'étui (17).

7. Dispositif (10) selon la revendication 6, **caractérisé par le fait que** le dispositif d'insertion à cheville (16) présente une cheville (22), qui est disposée mobile dans la direction longitudinale du produit semi-fini (7) et présente, au niveau de son extrémité en regard du produit fini (7), un diamètre qui correspond sensiblement au diamètre de l'extrémité du produit semi-fini (7) en regard de la cheville (22).

8. Dispositif (10) de renforcement d'un textile ou d'un substrat d'une structure de coeur (2) d'un composant, par exemple d'un aéronef ou d'un véhicule spatial, comportant :
- un dispositif d'acheminement (12) pour l'acheminement d'un produit semi-fini (7) de type agrafe sous la forme d'un produit froncé fini vers un étui (17) ;
- un dispositif de transport (15) présentant plusieurs étuis (17) ;
- un dispositif d'insertion à cheville (16) pour l'insertion du produit semi-fini (7) de type agrafe dans le substrat ou le textile d'une structure de coeur (2) ; et
- un dispositif de transport (15) destiné au transport de l'étui (17).

9. Dispositif (10) selon la revendication 8, **caractérisé par le fait que** le dispositif d'insertion à cheville (16) présente une cheville (22) qui est disposée mobile dans la direction longitudinale du produit semi-fini (7) et présente, au niveau de son extrémité en regard du produit fini (7) de type agrafe, une largeur qui correspond sensiblement à la largeur de l'extrémité du produit semi-fini (7) de type agrafe en regard de la cheville (22).

10. Dispositif (10) selon au moins l'une des revendications 6 à 9, **caractérisé par le fait que** les étuis (17) sont disposés les uns à côté des autres en une boucle sans fin.

11. Dispositif (10) selon au moins l'une des revendications 6 à 10, **caractérisé par le fait que** le dispositif d'insertion à cheville (22) présente un entraînement électrique, pneumatique ou/et hydraulique.
